# EUROPÄISCHE PATENTSCHRIFT

(11) **EP 3 090 627 B1**
(45) Veröffentlichungstag und Bekanntmachung des Hinweises auf die Patenterteilung: **14.03.2018**
(21) Anmeldenummer: 16168620.9
(22) Anmeldetag: 06.05.2016
(51) Int. Cl.: A01K 5/02, A01K 39/01, A01K 39/012

(54) **FÜTTERUNGSEINRICHTUNG MIT PICKBLOCK**
FEEDING DEVICE WITH PICK BLOCK
DISPOSITIF D'AFFOURAGEMENT DOTÉ D'UN BLOC POUR BÉQUETER

(30) Priorität: 05.05.2015 DE 202015102303 U
(43) Veröffentlichungstag der Anmeldung: 09.11.2016
(73) Patentinhaber: Big Dutchman International GmbH, 49377 Vechta (DE)
(72) Erfinder: BRUNNBERG, Holger, 49078 Osnabrück (DE)
(74) Vertreter: Eisenführ Speiser

(56) Entgegenhaltungen:
- GB-A- 171 929
- GB-A- 191 329 528
- US-A- 1 118 629
- US-A- 4 602 757

## Beschreibung

Die Erfindung betrifft eine Fütterungsvorrichtung für Geflügeltiere, umfassend eine Futtermittelquelle, eine an der Futtermittelquelle ausgebildete Futtermittelleitung, eine in der Futtermittelleitung angeordnete Futterventilvorrichtung, die in einer geschlossenen Ventilstellung den Durchtritt von Futtermittel durch die Futtermittelleitung sperrt und in einer geöffneten Ventilstellung den Durchtritt von Futtermittel durch die Futtermittelleitung freigibt.

Fütterungseinrichtungen werden in der Geflügelhaltung eingesetzt, um den Tieren Futter bereitzustellen. Neben dieser so erzielten Nahrungsaufnahme zählt noch die Wasseraufnahme, die freie Bewegung, gegebenenfalls die Eiablage und Staubbaden in der Einstreu oder im Freilandbereich zu den Hauptbeschäftigungsmöglichkeiten von Tieren in der Geflügelhaltung. Problematisch hieran ist, dass für einige Tiere diese Beschäftigungsmöglichkeiten nicht ausreichend sind. Dies kann dann zu negativen Verhalten wie zum Beispiel Federpieken und Kannibalismus führen. Insbesondere in Beständen, deren Schnäbel nicht kupiert sind, kann sich dies zu einem großen Problem entwickeln.

Grundsätzlich ist es bekannt, dem aus dieser Frustration resultierenden Fehlverhalten des Geflügels zu begegnen, indem dem Geflügel weiteres Beschäftigungsmaterial und weitere Beschäftigungsmöglichkeiten angeboten werden. Eine Möglichkeit besteht darin, einen oder mehrere Picksteine im Haltungsbereich der Tiere anzuordnen. Solche Picksteine werden in die Einstreu gestellt oder aufgehängt und dienen einerseits dazu, den Tieren eine zusätzliche Beschäftigungsmöglichkeit anzubieten, andererseits können die Picksteine ein Abnutzen des Schnabels und damit eine natürliche Funktion für die Tiere bewirken. Nachteilig ist jedoch, dass die Geflügeltiere den Anreiz, sich mit dem Pickstein zu beschäftigen, schnell verlieren und dann in die alten, unnatürlichen Verhaltensmuster zurückfallen.

Als dauerhaftere Beschäftigungsmöglichkeit mit einer geringeren Tendenz zur Abnahme der Attraktivität haben sich Raufen in Form von Heu- oder Strohballen oder mit Heu oder Stroh gefüllten Behältern erwiesen. In diesem Fall picken die Tiere aus der Raufe das Heu oder Stroh heraus und finden hierdurch eine Beschäftigungsmöglichkeit, die sich zwar nicht so kurzfristig in ihrer Attraktivität für die Tiere verbraucht, allerdings längerfristig auch keine interessante Beschäftigungsmöglichkeit darstellt.

Als weitere Möglichkeit haben sich Kunststoffelemente erwiesen, die aus einem solchen Material gestaltet sind, dass eine ausreichende Widerstandsfestigkeit besteht, damit die Tiere den Kunststoff nicht auffressen können. Diese Kunststoffelemente können in der Einstreu verteilt oder darüber aufgehängt werden und bilden so eine weitere Beschäftigungsmöglichkeit, die allerdings auch von kurzer Attraktivität ist.

Aus GB 29528 A und US 1118629 sind Fütterungsvorrichtungen bekannt, bei denen aus einem Futterbehälter Futter durch eine Abgabeöffnung nach unten abgegeben wird. Die Futterabgabe wird ausgelöst durch einen Köder, der an einer Pendelstange unterhalb des Containers befestigt ist und die Vögel durch einen Anreiz in Form von Futter, das in einem Behälter angeordnet ist bzw. Körner, die in ein Gummimaterial eingebettet sind, zum Picken anreizen soll.

Aus US 4,602,757 ist ein an den Gitterstäben eines Käfigs fest verschraubter Mineralblock vorbekannt, der zur Aufnahme von Mineralien und zum Schärfen des Schnabels für Papageienvögel dient.

Schließlich haben sich im Stand der Technik noch Beigaben zum Futter als Möglichkeit ergeben, um die Beschäftigungsmöglichkeiten der Geflügeltiere zu erhöhen. Hierbei wird neben der eigentlichen Fütterungseinrichtung für die Ernährung der Tiere auch eine zusätzliche Fütterungseinrichtung zur Beifütterung von zum Beispiel Weizen, Körnern, Grit, Muschelkalk in dem Haltungsbereich platziert. Diese Maßnahmen sind allerdings kostenaufwändig, und aufgrund der in der Regel einfachen Zugangsmöglichkeit der Tiere an diese Beifütterungsgaben ist der Beschäftigungseffekt in der Regel von kurzer Wirkung.

Der Erfindung liegt die Aufgabe zugrunde, eine Einrichtung für ein artgerechteres Verhalten und eine Haltungsweise mit geringeren Fehlverhalten der Geflügeltiere bereitzustellen.

Diese Aufgabe wird erfindungsgemäß gelöst mittels einer Fütterungsvorrichtung nach Anspruch 1.

Die erfindungsgemäße Fütterungsvorrichtung zeichnet sich durch eine Doppelfunktion aus, die sowohl für das Ernährungsverhalten als auch das Sozialverhalten ein natürliches Verhalten der gehaltenen Geflügeltiere motiviert. Erfindungsgemäß ist vorgesehen, dass die Geflügeltiere ihre Nahrung aus einer Futtermittelquelle beziehen, das Abgeben des Futters aus dieser Quelle jedoch durch einen Pickvorgang der Geflügeltiere an einem Pickblock ausgelöst wird. Hierdurch werden die zwei Beschäftigungsmöglichkeiten, nämlich das Picken am Pickblock einerseits und die Futteraufnahme andererseits, nicht, wie im Stand der Technik, voneinander getrennt, sondern einem gemeinschaftlichen Verhaltensmuster zugeführt. Durch das Picken der Geflügeltiere am Pickblock können die Tiere die erforderliche Auslenkung herbeiführen und hierdurch die Abgabe von Futter aus der Futterquelle bewirken. Durch diese kombinierte funktionelle Wirkung wird der Anreiz für die Geflügeltiere, sich mit dem Pickblock zu beschäftigen, dauerhaft aufrechterhalten und in die normalen Tagesbedürfnisse integriert. Die Frustration der Tiere wird hierdurch maßgeblich verringert und Zusatzfunktionen durch den Pickblock, wie beispielsweise Schnabelabnutzung, Aufnahme von Mineralstoffen, können erzielt werden.

Als Futtermittelquelle kann hierbei beispielsweise ein Futtermittelvorratsbehälter eingesetzt werden. Ein Futtermittelvorratsbehälter speichert eine bestimmte Menge an Futtermittel und kann manuell aus Vorratssäcken oder dergleichen befüllt werden oder über eine Futterversorgungsleitung, die im Stall dauerhaft verlegt sein kann, in zeitlichen Abständen befüllt werden. Als Futtermittelquelle kann auch eine Futterversorgungsleitung eingesetzt werden. In diesem Fall erfolgt die Futtermittelzufuhr über die Futterversorgungsleitung, die wiederum dauerhaft im Stall verlegt sein kann. Bei einer solchen Ausgestaltung kann ein Futtermittelvorratsbehälter entfallen und das Futtermittel wird in einem Abschnitt der Futterversorgungsleitung zwischengespeichert und periodisch oder konstant diesem Abschnitt zugeführt.

Unter einem Pickblock ist hierbei allgemein ein zum Picken animierendes Material zu verstehen, das als natürlicher Rohstoff, beispielsweise Gestein, oder als künstlich hergestelltes Material in Form eines Komposits, Mineralverbundwerkstoffs oder in sonstiger Weise bereitgestellt sein kann. Der Pickblock kann grundsätzlich unterschiedliche Formen aufweisen, bevorzugt sind rotationssymmetrische Ausgestaltungen, beispielsweise als Zylinder- oder Kegelform. Grundsätzlich ist es bevorzugt, dass der Pickblock lösbar mit der Futterventilvorrichtung mechanisch gekoppelt ist, sodass bei Abnutzung, Verbrauch oder Beschädigung des Pickblocks ein Austausch in einfacher Weise möglich ist. Unter der Ruheposition des Pickblocks ist hierbei die Position zu verstehen, die sich bei ordnungsgemäßer Befestigung beziehungsweise Aufstellung der Fütterungsvorrichtung in dem Haltungsbereich der Geflügeltiere ergibt, wenn keines der Geflügeltiere den Pickblock bearbeitet bzw. keine externe Krafteinwirkung auf den Pickblock erfolgt. Diese Ruheposition stellt sich typischerweise aufgrund der Schwerkraftwirkung ein, kann aber auch durch Federbelastung oder dergleichen zusätzlich stabilisiert werden. Unter der ausgelenkten Position ist hierbei die Position zu verstehen, die sich durch Krafteinwirkung auf den Pickblock ergeben kann. Grundsätzlich kann eine einzige ausgelenkte Position vorgesehen sein, bevorzugt ist es jedoch, dass mehrere ausgelenkte Positionen durch Krafteinwirkung auf den Pickblock erzielt werden können und jede dieser ausgelenkten Positionen oder einige dieser ausgelenkten Positionen zur Abgabe von Futter beziehungsweise Öffnung der Futterventilvorrichtung führen.

Gemäß einer ersten bevorzugten Ausführungsform ist vorgesehen, dass der Pickblock mittels einer Pendelstange mit der Ventilvorrichtung gekoppelt ist. Durch eine solche Pendelstange wird eine pendelnde Bewegung des Pickblocks erzielt. Grundsätzlich kann dies solcherart erfolgen, dass der Pickblock am oberen Ende einer darunter pendelnd aufgestellten Pendelstange angeordnet ist oder der Pickblock am unteren Ende einer darüber pendelnd aufgehängten Pendelstange befestigt ist. Der Pickblock selbst sollte hierbei in einer für die Geflügeltiere zum Picken gut zugänglichen Höhe angeordnet sein.

Gemäß einer weiteren bevorzugten Ausführungsform ist vorgesehen, dass die Futtermittelquelle oberhalb der Futterventilvorrichtung angeordnet ist und das Futtermittel in der geöffneten Ventilstellung durch Schwerkrafteinfluss aus der Futtermittelquelle austritt. Bei dieser bevorzugten Ausführungsform wird eine einfache Abgabe des Futtermittels aus der Futtermittelquelle durch die Futterventilvorrichtung bewirkt, indem hierzu die Schwerkraft genutzt wird. Grundsätzlich kann die Schwerkraft alleinig benutzt werden, es können jedoch auch Fördereinrichtungen als Zusatzhilfsmittel hierbei zum Einsatz kommen, beispielsweise kann durch die Betätigung der Futterventilvorrichtung eine Misch- oder Lockerungsbewegung in dem Futter innerhalb der Futtermittelquelle bewirkt werden, mit der die Futterabgabe unterstützt wird.

Gemäß einer weiteren bevorzugten Ausführungsform ist vorgesehen, dass die Pendelstange in einer oberhalb des Pickblocks angeordneten Pendellagerung pendelnd gelagert ist. Gemäß dieser Ausführungsform ist die Pendelstange als hängende Stange ausgeführt, welche an einem oberen Ende pendelnd gelagert ist und den Pickblock an ihrem unteren Ende trägt. Der Vorteil einer solchen Ausgestaltung ist die schwerkraftbedingte Rückstellung der Pendelstange in die Ruhestellung und die gute Integrierbarkeit dieser Konstruktion in eine Fütterungsvorrichtung mit schwerkraftbetätigter Abgabe des Futtermittels. Grundsätzlich kann die Lagerung der Pendelstange hierbei oberhalb oder unterhalb der Futterventilvorrichtung angeordnet sein.

Gemäß einer weiteren bevorzugten Ausführungsform ist vorgesehen, dass die Futterventilvorrichtung durch eine Durchtrittsöffnung und einen mit dem Pickblock mechanisch gekoppelten Ventilkörper gebildet wird, der in der Ruheposition die Durchtrittsöffnung verschließt und in der ausgelenkten Position die Durchtrittsöffnung zumindest teilweise freigibt. Gemäß dieser Ausführungsform wird eine robuste und zuverlässige Ausgestaltung der Futterventilvorrichtung bereitgestellt, indem ein Ventilkörper eine Durchtrittsöffnung verschließt und dieser Ventilkörper durch die Auslenkung des Pickblocks in eine solche Position gebracht wird, in der die Durchtrittsöffnung nicht vollständig verschlossen wird und das Futtermittel folglich hindurchtreten kann. Der Ventilkörper kann hierbei als tellerförmiges, konisches oder in anderer Geometrie gestaltetes Element ausgeführt sein. Der Ventilkörper kann durch eine elastische Schließkraft in die Durchtrittsöffnung gepresst werden, um einen zuverlässigen Verschluss zu bewirken und hierdurch zusätzlich eine Positionierung in der Ruhestellung bewirken. Grundsätzlich kann der Ventilkörper auf der dem Futtermittelzufluss zugewandten oder dem Futtermittelzufluss abgewandten Seite der Durchtrittsöffnung angeordnet sein, um die Verschlusswirkung und teilweise oder vollständige Freigabewirkung der Durchtrittsöffnung zu bewirken.

Dabei ist es gemäß einer weiteren bevorzugten Ausführungsform vorgesehen, dass der Ventilkörper am oberen Ende der Pendelstange und der Pickblock am unteren Ende der Pendelstange befestigt ist. Bei dieser Ausführungsform ist die Pendelstange als hängendes Verbindungselement zwischen der Futterventilvorrichtung und dem Pickblock ausgeführt. Unter einer Befestigung am oberen Ende beziehungsweise am unteren Ende ist hierbei zu verstehen, dass die Befestigung im oberen beziehungsweise unteren Endbereich der Pendelstange ausgeführt ist, nicht aber notwendigerweise am oberen beziehungsweise unteren stirnseitigen Ende ausgeführt sein muss.

Erfindungsgemäß ist vorgesehen, dass der Pickblock ein abrasives Material umfasst. Hierdurch wird durch den Pickblock eine abrasive Wirkung auf die Schnäbel der Geflügeltiere ausgeübt und hierdurch die natürliche Schnabelabnutzung beim Picken erzielt. Grundsätzlich kann der Pickblock zu diesem Zweck eine abrasive Oberfläche aufweisen oder aus einem abrasiven Material insgesamt bestehen. Unter abrasiv ist hierbei eine Oberfläche zu verstehen, die in etwa einem Schleifpapier der Körnung 20 bis 150 entspricht.

Gemäß einer weiteren bevorzugten Ausführungsform ist vorgesehen, dass der Pickblock ein mineralisches Material umfasst. Bei dieser Ausführungsform wird der Pickblock einer zusätzlichen Funktion gerecht, indem er die Geflügeltiere mit einer Mineralgabe zusätzlich zum Futter versieht. Um diese Futterzugabewirkung zu erzielen, ist der Pickblock solcherart ausgeführt, dass durch das Picken kleine Anteile des mineralischen Materials sich aus dem Pickblock herauslösen und von den Geflügeltieren aufgenommen werden können.

Gemäß einer weiteren bevorzugten Ausführungsform ist vorgesehen, dass der Pickblock eine Oberfläche aufweist, auf welche das Futtermittel in der ausgelenkten Position fällt und auf der zumindest Teile des Futtermittels zu liegen kommen. Bei dieser Ausführungsform ist am Pickblock eine horizontal ausgerichtete Fläche oder ein trog- oder becherförmiger Flächenabschnitt ausgebildet, in bzw. auf dem sich das Futtermittel, welches aus der Futtermittelquelle herausfällt, sammeln oder ablagern kann. Diese Ausführungsform erfordert grundsätzlich eine Anordnung des Pickblocks unterhalb von der Abgabeöffnung des Futtermittels. Durch die teilweise Ablagerung des herausfallenden Futtermittels in der ausgelenkten Position werden die Geflügeltiere zusätzlich zum Aufnehmen der auf dem Pickblock abgelagerten Futtermittelanteile angeregt, insbesondere auch dann, wenn der Pickblock wieder in der Ruheposition ist. Hierdurch wird ein ständig neuer Anreiz gegeben, damit sich die Geflügeltiere mit dem Pickblock beschäftigen und diesen aus der Ruheposition in die ausgelenkte Position betätigen.

Schließlich ist gemäß einer weiteren bevorzugten Ausführungsform vorgesehen, dass die Futtermittelquelle am unteren Ende eine Austrittsöffnung aufweist, die in die Futtermittelleitung mündet, und dass der Pickblock an dem unteren Ende einer Pendelstange befestigt ist, die im oberen Endabschnitt einen Ventilteller trägt, der die Austrittsöffnung in der ruhenden Position verschließt und in der ausgelenkten Position zumindest teilweise freigibt, und an einer Position zwischen dem oberen Endabschnitt und dem unteren Ende pendelnd in der Futtermittelleitung gelagert ist. Bei dieser Ausführungsform ist die Pendelstange zwischen der Futterventilvorrichtung und dem Pickblock pendelnd gelagert, wodurch sich eine günstige Übersetzungswirkung des Auslenkungshubs erzielen lässt. Zugleich ist dies vorteilhaft, um die Pendellagerung in einer Zone anzuordnen, welche in der ruhenden Position frei von Futtermittel ist und somit leichtgängig gehalten werden kann. Dies erlaubt es, die Pendellagerung in der Futtermittelleitung auszuführen. Dies kann beispielsweise erfolgen, indem die Pendelstange durch einen umlaufend gelochten Ring, der in der Futtermittelleitung befestigt, beispielsweise eingeschweißt ist, geführt und mittels einer Verdickung oberhalb dieses Rings aufgehängt und pendelnd gelagert ist. Die umlaufenden Öffnungen in dem Ring erlauben dann den Futtermitteldurchtritt bei der ausgelenkten Position.

Ein weiterer Aspekt der Erfindung ist die Verwendung eines Pickblocks gemäß Anspruch 10. Mit dieser erfindungsgemäßen Verwendung wird der besondere Vorteil erzielt, dass der Pickblock für die Geflügeltiere eine dauerhaft attraktive Beschäftigungsmöglichkeit darstellt, da er bei der täglichen Futteraufnahme eine Funktion für das Geflügeltier in Form der Auslösung der Futtergabe bewirkt.

Erfindungsgemäß kann bei dieser Verwendung die Fütterungsvorrichtung fortgebildet werden, wie dies zuvor erläutert wurde.

Eine bevorzugte Ausführungsform der Erfindung wird anhand der beiliegenden Figuren beschrieben. Es zeigen:
- Figur 1: eine perspektivische Ansicht einer ersten Ausführungsform der Erfindung,
- Figur 2: eine perspektivische Ansicht einer zweiten Ausführungsform der Erfindung,
- Figur 3: eine längsgeschnittene Seitenansicht der zweiten Ausführungsform der Erfindung in Ruhestellung,
- Figur 4: eine längsgeschnittene Ansicht der zweiten Ausführungsform der Erfindung in ausgelenkter Stellung, und
- Figur 5: eine perspektivische Ansicht einer dritten Ausführungsform der Erfindung.

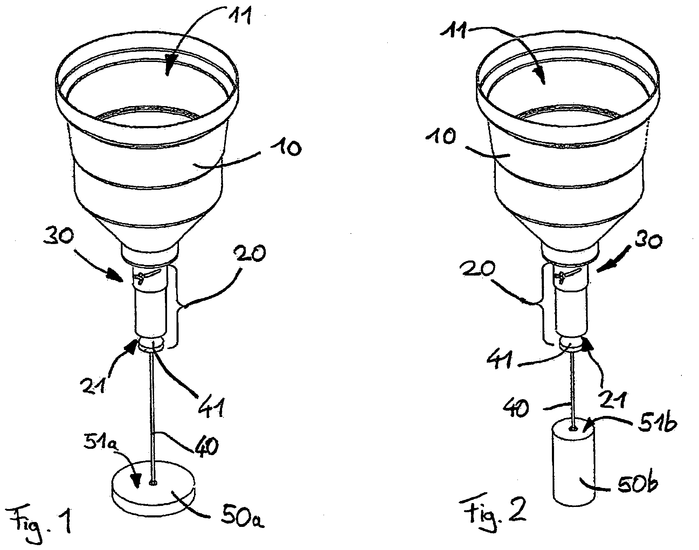

Bezug nehmend zunächst auf die Fig. 1 und 2 umfasst eine erfindungsgemäße Fütterungsvorrichtung einen Futtervorratsbehälter 10. Dieser Futtervorratsbehälter weist eine obere große Öffnung 11 zum Einfüllen des Futters auf. Nach unten hin weist der Futtervorratsbehälter einen konisch zulaufenden Querschnittsverlauf auf und mündet in eine Futtermittelleitung 20.

Unterhalb des Futtervorratsbehälters 10 ist ein Futterdosierer 30 in der Futtermittelleitung 20 angeordnet. Der Futterdosierer dient dazu, um den Ablauf von Futter aus dem Futtervorratsbehälter durch die Futtermittelleitung 20 zu sperren oder freizugeben. Am unteren Ende der Futtermittelleitung 20 ist eine Austrittsöffnung 21 für das Futtermittel vorgesehen, aus der das Futtermittel vertikal nach unten ausströmen kann.

Unterhalb dieser Austrittsöffnung 21 ist ein Verteilkegel 41 angeordnet. Der Verteilkegel 41 weist eine nach oben konisch zulaufende Fläche auf, welche bewirkt, dass das aus der Futteraustrittsöffnung ausströmende Futter nach seitlich außen abgelenkt und verteilt wird.

Der Verteilkegel 41 ist an einer Pendelstange 40 befestigt, deren oberes Ende in einer nachfolgend näher erläuterten Weise innerhalb der Futtermittelleitung 20 pendelnd gelagert ist. Am unteren Ende der Pendelstange 40 ist ein Pickblock befestigt. Der Pickblock 50a der ersten Ausführungsform ist als flache, rotationssymmetrische Scheibe mit kreisförmigem Querschnitt ausgeführt. Dieser Pickblock weist eine obere, axiale Stirnfläche 51a auf, auf der aus der Futteraustrittsöffnung herausfallendes Futtermittel zu liegen kommt und von den Geflügeltieren aufgenommen werden kann.

Bei der zweiten Ausführungsform ist der Pickblock 50b als schmaler zylinderförmiger Vollkörper ausgebildet. Bei dieser Ausführungsform ist die obere Stirnfläche 51b kleiner ausgebildet, demgegenüber bietet diese Geometrie des Pickblocks eine größere Außenumfangsfläche, an der die Geflügeltiere ihren Schnabel abwetzen können.

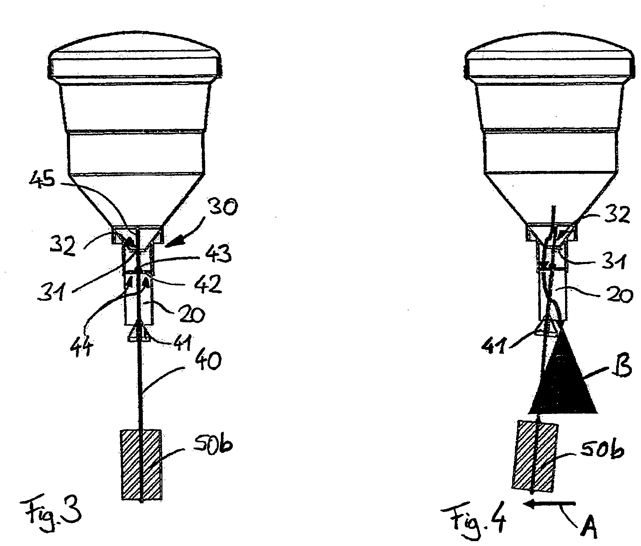

Bezug nehmend auf die Fig. 3 und 4 wird nachfolgend die Funktionsweise der erfindungsgemäßen Fütterungsvorrichtung erläutert. In der in Fig. 3 gezeigten Ruhestellung ist die Pendelstange 40 vertikal angeordnet. Der Futterdosierer 30 wird gebildet durch einen tellerförmigen Ventilkörper 31, der am oberen Ende der Pendelstange starr befestigt ist. Dieser Ventilkörper ist scheibenförmig ausgebildet und verschließt eine Ventilöffnung 32 des Futterdosierers in der abgebildeten Ruhestellung. Die Pendelstange 40 ist in einer Ringscheibe 42 pendelnd gelagert. Zu diesem Zweck weist die Ringscheibe eine zentrale Bohrung auf, die größer ausgeführt ist als die Querschnittsabmessung der Pendelstange. Oberhalb dieser Bohrung ist an der Pendelstange ein Pendellagerring 43 befestigt, dessen Außendurchmesser größer ist als die Bohrung in der Ringscheibe 42. Die Pendelstange 40 ist daher daran gehindert, aus der Bohrung in der Ringscheibe nach unten durchzurutschen, kann jedoch um die in der Ringscheibe definierte Pendelachse in allen horizontalen Richtungen bzw. um alle horizontalen Achsen pendeln. Die Ringscheibe 42 ist mit mehreren seitlichen, umfänglich verteilten Durchtrittslöchern 44 versehen, um den Durchtritt von Futtermittel durch die Futtermittelleitung 20 zu ermöglichen.

Wird die Pendelstange durch eine Krafteinwirkung A mit horizontaler Kraftkomponente am Pickblock seitlich ausgelenkt, wie dies in Fig. 4 gezeigt ist, so schließt der Ventilkörper 31 die Ventilöffnung 32 des Futtermittelbehälters nicht mehr vollständig ab, sodass Futtermittel in die Futtermittelleitung einströmen kann. Dieses Futtermittel läuft durch die seitlichen Öffnungen 44 der Ringscheibe hindurch, trifft auf den Verteilerkegel 41 und wird von diesem verteilt, sodass, wie durch den dreieckigen Trichter B in Fig. 4 angedeutet, ein Teil des Futters neben dem Pickblock herabfällt und ein Teil auf die obere Stirnfläche des Pickblocks fällt. Dieses Futter kann dann von den Geflügeltieren aufgenommen werden, das auf der oberen Stirnfläche des Pickblocks liegende Futter reizt hierbei zur weiteren Betätigung des Pickblocks und einer entsprechenden Beschäftigung des Geflügeltiers.

Wie weiterhin ersichtlich, ragt die Pendelstange über den Ventilkörper als Mischabschnitt 45 nach oben hinaus eine gewisse Distanz in den Futtervorratsbehälter 10 hinein. Hierdurch wird bei Auslenken der Pendelstange eine Lockerungsbewegung im unteren Bereich des Futtervorratsbehälters bewirkt, was etwaigen Verklemmungen und dadurch hervorgerufenen Verstopfungen des körnigen Futtermittels entgegenwirkt und eine zuverlässige Ausströmung des Futters bei ausgelenkter Pendelstange sicherstellt.

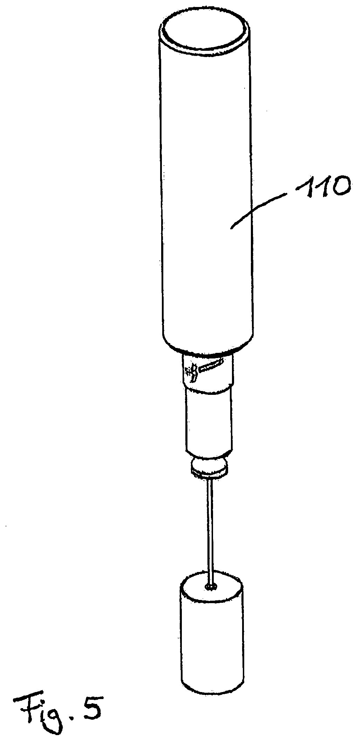

Figur 5 zeigt eine dritte Ausführungsform der Erfindung. Bei dieser Ausführungsform ist anstelle des Futtervorratsbehälters eine Futterversorgungsleitung 110 vorgesehen. Diese Futterversorgungsleitung verläuft in dieser Ausführungsform senkrecht und erstreckt sich bis zu einer Futterverteilerleitung, die beispielsweise unterhalb der Decke eines Stalles verlaufen kann. Aus dieser Futterverteilerleitung wird die Futterversorgungsleitung - und gegebenenfalls weitere Futterversorgungsleitungen - periodisch mit Futter versorgt. Die Futterversorgungsleitungen können hierbei vertikal verlaufen, können aber auch schräg verlaufende oder sogar kurze horizontal verlaufende Abschnitte aufweisen. Die Futterversorgungsleitung selbst dient hierbei als Vorratsspeicher, in dem das Futter temporär zwischengespeichert werden kann, um dann durch Picken der Geflügeltiere am Pickblock und daraus folgende Auslenkung und Öffnung des Futterventils abgerufen zu werden. Futterventil und Pickblock der dritten Ausführungsform sind hierbei übereinstimmend mit der zweiten Ausführungsform ausgeführt.

## Patentansprüche

1. Fütterungsvorrichtung für Geflügeltiere, umfassend:
- einen Futtermittelquelle (10),
- eine an die Futtermittelquelle angeschlossene Futtermittelleitung (20),
- eine in der Futtermittelleitung angeordnete Futterventilvorrichtung (30), die in einer geschlossenen Ventilstellung den Durchtritt von Futtermittel durch die Futtermittelleitung sperrt und in einer geöffneten Ventilstellung den Durchtritt von Futtermittel durch die Futtermittelleitung freigibt,
- einen Pickblock (50a, 50b), der beweglich gelagert und mechanisch solcherart mit der Futterventilvorrichtung gekoppelt ist, dass in einer Ruheposition des Pickblocks die Futterventilvorrichtung geschlossen ist und in einer durch Picken am Pickblock ausgelenkten Position des Pickblocks die Futterventilvorrichtung geöffnet ist,
**dadurch gekennzeichnet, dass** der Pickblock ein abrasives Material umfasst.

2. Fütterungsvorrichtung nach Anspruch 1,
**dadurch gekennzeichnet, dass** der Pickblock mittels einer Pendelstange (40)mit der Ventilvorrichtung gekoppelt ist.

3. Fütterungsvorrichtung nach Anspruch 1 oder 2,
**dadurch gekennzeichnet, dass** die Futtermittelquelle (10) oberhalb der Futterventilvorrichtung (30) angeordnet ist und das Futtermittel in der geöffneten Ventilstellung durch Schwerkrafteinfluss aus der Futtermittelquelle austritt.

4. Fütterungsvorrichtung nach Anspruch 2 und 3,
**dadurch gekennzeichnet, dass** die Pendelstange in einer oberhalb des Pickblocks angeordneten Pendellagerung (42,43) pendelnd gelagert ist.

5. Fütterungsvorrichtung nach einem der vorhergehenden Ansprüche,
**dadurch gekennzeichnet, dass** die Futterventilvorrichtung durch eine Durchtrittsöffnung (32) einen mit dem Pickblock mechanisch gekoppelten Ventilkörper (31) gebildet wird, der in der Ruheposition die Durchtrittsöffnung verschließt und in der ausgelenkten Position die Durchtrittsöffnung zumindest teilweise freigibt.

6. Fütterungsvorrichtung nach den vorhergehenden Ansprüchen 4 und 5,
**dadurch gekennzeichnet, dass** der Ventilkörper am oberen Ende der Pendelstange und der Pickblock am unteren Ende der Pendelstange befestigt ist.

7. Fütterungsvorrichtung nach einem der vorhergehenden Ansprüche,
**dadurch gekennzeichnet, dass** der Pickblock ein mineralisches Material umfasst.

8. Fütterungsvorrichtung nach einem der vorhergehenden Ansprüche,
**dadurch gekennzeichnet, dass** der Pickblock eine Oberfläche (51a, 51b) aufweist, auf welche das Futtermittel in der ausgelenkten Position fällt und auf der zumindest Teile des Futtermittels zu liegen kommen.

9. Fütterungsvorrichtung nach Anspruch 1,
**dadurch gekennzeichnet, dass** die Futtermittelquelle an einem unteren Ende eine Austrittsöffnung aufweist, die in die Futtermittelleitung mündet, und dass der Pickblock an dem unteren Ende einer Pendelstange befestigt ist, die
- im oberen Endabschnitt einen Ventilteller trägt, der die Austrittsöffnung in der ruhenden Position verschließt und in der ausgelenkten Position zumindest teilweise freigibt, und
- an einer Position zwischen dem oberen Endabschnitt und dem unteren Ende pendelnd in der Futtermittelleitung gelagert ist.

10. Verwendung eines Pickblocks (50a, 50b) zum Auslösen einer Futtergabe aus einer Fütterungsvorrichtung für Geflügeltiere, wobei der Pickblock beweglich gelagert und mechanisch solcherart mit einer Futterventilvorrichtung gekoppelt ist, das in einer Ruheposition des Pickblocks die Futterventilvorrichtung geschlossen ist und in einer durch Picken am Pickblock ausgelenkten Position des Pickblocks die Futterventilvorrichtung geöffnet ist,
**dadurch gekennzeichnet, dass** der Pickblock ein abrasives Material umfasst.

11. Verwendung nach Anspruch 10,
**dadurch gekennzeichnet, dass** die Fütterungsvorrichtung nach Anspruch 1 oder dem kennzeichnenden Teil eines der Ansprüche 2-9 fortgebildet ist.

## Claims

1. A feeding apparatus for poultry, comprising:
- a feed source (10),
- a feed line (20) connected to the feed source,
- a feed valve mechanism (30) which is arranged in the feed line and which in a closed valve position blocks feed from passing through the feed line and in an open valve position allows feed to pass through the feed line,
- a pecking block (50a, 50b) which is moveably mounted and mechanically coupled to the feed valve mechanism in such a way that the feed valve mechanism is closed when the pecking block is in a neutral position and the feed valve mechanism is open when the pecking block is in a deflected position due to pecking at the pecking block,
**characterised in that** the pecking block (50a, 50b) includes an abrasive material.

2. The feeding apparatus according to claim 1,
**characterised in that** the pecking block is coupled to the valve device by means of a pendulum rod (40).

3. The feeding apparatus according to claim 1 or 2,
**characterised in that** the feed source (10) is arranged above the feed valve mechanism (30) and the feed drops out of the feed source under the influence of gravity when the valve mechanism is in the open position.

4. The feeding apparatus according to claim 2 and 3,
**characterised in that** the pendulum rod is swingingly mounted in a pendulum bearing (42,43) arranged above the pecking block.

5. The feeding apparatus according to any one of the preceding claims,
**characterised in that** the feed valve mechanism is formed by a through hole (32) and a valve member (31) which is mechanically coupled to the pecking block and which closes the through hole when in the neutral position and opens the through hole at least partially when in the deflected position.

6. The feeding apparatus according to any of the preceding claims 4 and 5,
**characterised in that** the valve member is fixed to the top end of the pendulum rod and the pecking block is fixed to the bottom end of the pendulum rod.

7. The feeding apparatus according to any one of the preceding claims,
**characterised in that** the pecking block includes a mineral material.

8. The feeding apparatus according to any one of the preceding claims,
**characterised in that** the pecking block has a surface (51a, 51b) onto which the feed falls when in the deflected position and on which at least parts of the feed remain lying.

9. The feeding apparatus according to claim 1,
**characterised in that** the feed source has an outlet opening at a bottom end, which opens into the feed line, and that the pecking block is fixed to the bottom end of a pendulum rod which
- carries in the upper end portion a valve disc which closes the outlet opening when in the neutral position and opens it at least partially when in the deflected position, and
- is swingingly mounted in the feed line at a position between the upper end portion and the bottom end.

10. The use of a pecking block (50a, 50b) to trigger a release of feed from a feeding apparatus for poultry wherein the pecking block (50a, 50b) is moveably mounted and mechanically coupled to the feed valve mechanism in such a way that the feed valve mechanism is closed when the pecking block is in a neutral position and the feed valve mechanism is open when the pecking block is in a deflected position due to pecking at the pecking block,
**characterised in that** the pecking block (50a, 50b) includes an abrasive material.

11. The use according to claim 10,
**characterised in that** the feeding apparatus is developed according to claim 1 or the characterising features of any one of claims 2 to 9.

## Revendications

1. Dispositif d'affouragement pour des volailles, comprenant :
- une source d'aliments pour animaux (10),
- une conduite d'aliments pour animaux (20) raccordée à la source d'aliments pour animaux,
- un dispositif de soupape d'alimentation animale (30) disposé dans la conduite d'aliments pour animaux qui bloque, dans une position de soupape fermée, le passage d'aliments pour animaux par la conduite d'aliments pour animaux et libère, dans une position de soupape ouverte, le passage d'aliments pour animaux par la conduite d'aliments pour animaux,
- un bloc pour becqueter (50a, 50b) qui est logé de manière mobile et est couplé mécaniquement au dispositif de soupape d'alimentation animale de telle manière que, dans une position de repos du bloc pour becqueter, le dispositif de soupape d'alimentation animale soit fermé et, dans une position déviée par le becquetage sur le bloc pour becqueter, le dispositif de soupape d'alimentation animale soit ouvert, **caractérisé en ce que** le bloc pour becqueter comporte un matériau abrasif.

2. Dispositif d'affouragement selon la revendication 1,
**caractérisé en ce que** le bloc pour becqueter est couplé au moyen d'une tige pendulaire (40) au dispositif de soupape.

3. Dispositif d'affouragement selon la revendication 1 ou 2,
**caractérisé en ce que** la source d'aliments pour animaux (10) est disposée au-dessus du dispositif de soupape d'alimentation animale (30) et les aliments pour animaux sortent, dans la position de soupape ouverte, sous l'influence de la force de gravité, de la source d'aliments pour animaux.

4. Dispositif d'affouragement selon les revendications 2 et 3,
**caractérisé en ce que** la tige pendulaire est logée de manière pendulaire dans un logement pendulaire (42, 43) disposé au-dessus du bloc pour becqueter.

5. Dispositif d'affouragement selon l'une quelconque des revendications précédentes,
**caractérisé en ce que** le dispositif de soupape d'alimentation animale est formé au travers d'une ouverture de passage (32) par un corps de soupape (31) couplé mécaniquement au bloc pour becqueter qui ferme, dans la position de repos, l'ouverture de passage et libère au moins partiellement, dans la position déviée, l'ouverture de passage.

6. Dispositif d'affouragement selon les revendications précédentes 4 et 5,
**caractérisé en ce que** le corps de soupape est fixé sur l'extrémité supérieure de la tige pendulaire et le bloc pour becqueter sur l'extrémité inférieure de la tige pendulaire.

7. Dispositif d'affouragement selon l'une quelconque des revendications précédentes,
**caractérisé en ce que** le bloc pour becqueter comporte un matériau minéral.

8. Dispositif d'affouragement selon l'une quelconque des revendications précédentes,
**caractérisé en ce que** le bloc pour becqueter présente une surface (51a, 51b) sur laquelle les aliments pour animaux tombent dans la position déviée et sur laquelle au moins des parties des aliments pour animaux viennent se poser.

9. Dispositif d'affouragement selon la revendication 1,
**caractérisé en ce que** la source d'aliments pour animaux présente, à une extrémité inférieure, une ouverture de sortie qui débouche dans la conduite d'aliments pour animaux et **en ce que** le bloc pour becqueter est fixé à l'extrémité inférieure d'une tige pendulaire qui
- porte, dans la section d'extrémité supérieure, une tête de soupape qui ferme l'ouverture de sortie dans la position de repos et la libère au moins partiellement dans la position déviée, et
- est logée dans une position entre la section d'extrémité supérieure et l'extrémité inférieure de manière pendulaire dans la conduite d'aliments pour animaux.

10. Utilisation d'un bloc pour becqueter (50a, 50b) pour déclencher une ration alimentaire d'un dispositif d'affouragement pour des volailles, dans laquelle le bloc pour becqueter est logé de manière mobile et est couplé mécaniquement à un dispositif de soupape d'alimentation animale de telle manière que, dans une position de repos du bloc pour becqueter, le dispositif de soupape d'alimentation animale soit fermé et, dans une position déviée par le becquetage sur le bloc pour becqueter du bloc pour becqueter, le dispositif de soupape d'alimentation animale soit ouvert,
**caractérisée en ce que** le bloc pour becqueter comporte un matériau abrasif.

11. Utilisation selon la revendication 10,
**caractérisée en ce que** le dispositif d'affouragement est perfectionné selon la revendication 1 ou la partie caractérisante d'une quelconque des revendications 2 à 9.
